Europäisches Patentamt

European Patent Office

Office européen des brevets

(19)

(11) EP 0 630 120 B1

(12) FASCICULE DE BREVET EUROPEEN

(45) Date de publication et mention
de la délivrance du brevet:
**14.04.1999 Bulletin 1999/15**

(51) Int Cl.⁶: **H04B 7/26**, H04J 13/00

(21) Numéro de dépôt: **94401338.2**

(22) Date de dépôt: **15.06.1994**

(54) **Procédé de synchronisation pour des communications radiotéléphoniques à accès multiple à répartition par codes**

Synchronisationsverfahren in Funktelefonkommunikationen mit Kodemultiplex-Vielfachzugriff

Synchronisation method for radio telephone communications with code division multiplex access

(84) Etats contractants désignés:
**AT BE CH DE ES GB GR IE IT LI LU NL SE**

(30) Priorité: **16.06.1993 FR 9307269**

(43) Date de publication de la demande:
**21.12.1994 Bulletin 1994/51**

(73) Titulaire: **MATRA NORTEL COMMUNICATIONS**
**29000 Quimper (FR)**

(72) Inventeurs:
• **Lucas, Philippe**
**F-91120 Palaiseau (FR)**
• **Mege, Philippe**
**F-92340 Bourg La Reine (FR)**
• **Pineau, Stéphane**
**F-78150 Le Chesnay (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
**EP-A- 0 216 974**          **DE-A- 3 922 972**
**US-A- 5 111 478**

## Description

La présente invention concerne le domaine des communications radiotéléphoniques à accès multiple à répartition par codes (AMRC).

L'AMRC est un mode de communication numérique à spectre étalé dans lequel on crée différents canaux de transmission en utilisant, pour chaque canal, des séquences d'étalement modulant les bits d'information à transmettre. Les séquences d'étalement ont une cadence supérieure à celle des bits d'information pour réaliser l'étalement du spectre du signal radio. Leurs propriétés d'auto- et d'inter-corrélation sont adaptées pour permettre le multiplexage des différents canaux : ce sont en général des séquences pseudo-aléatoires, orthogonales ou quasi-orthogonales entre elles, prenant les valeurs -1 ou +1.

L'utilisation de l'AMRC dans le domaine de la radiotéléphonie cellulaire est décrite dans le chapitre I de l'ouvrage "Mobile radio communications" de Raymond Steele, Pentech Press, Londres, 1992, ainsi que dans l'article "On the system design aspects of code division multiple access (CDMA) applied to digital cellular and personal communications networks", de A. Salmasi et K.S. Gilhousen, Proc. of the 41st IEEE Vehicular Technology Conference, St Louis, MO, 19-22 mai 1991. Les canaux de transmission multiplexés sont formés au niveau de la station de base de chaque cellule du réseau. Chaque station mobile située dans la cellule utilise une séquence d'étalement particulière pour retrouver, dans le signal radio global émis par la station de base, les bits d'information qui lui sont destinés.

Dans le système décrit dans les publications ci-dessus, les différentes séquences d'étalement sont obtenues à partir d'une même séquence de référence ayant une cadence de 1,2288 MHz, et une périodicité de 32 768 échantillons, ou "chips". La modulation radio étant une modulation de phase à quatre états, la séquence de référence comporte une composante en phase et une composante en quadrature. Soixante-quatre canaux de transmission sont formés au niveau de la station de base en combinant la séquence de référence à l'un des soixante-quatre codes de Walsh de longueur 64. Le canal défini par le code de Walsh $W_0$, qui ne comprend que des 1, est un canal pilote sur lequel n'est envoyé aucun bit d'information. Le canal pilote transmet donc la séquence de référence de façon synchrone avec l'ensemble des séquences d'étalement. Les stations mobiles connaissent a priori les valeurs de la séquence de référence, de sorte qu'en recevant le canal pilote, ils peuvent se synchroniser avec la station de base pour recevoir les bits d'information qui leur sont respectivement destinés.

Qu'on fasse ou non appel à la technique des codes de Walsh, il est toujours utile de former un canal pilote permettant aux stations mobiles de se synchroniser. Le canal pilote transmet une séquence périodique pseudo-aléatoire de référence, ayant la même cadence que les séquences d'étalement, et synchronisée avec celles-ci.

Un autre exemple de récepteur AMRC est décrit dans EP-A-0 216 974.

Il existe différents procédés pour obtenir la synchronisation désirée, qui utilisent tous les bonnes propriétés d'auto- et d'inter-corrélation des séquences pseudo-aléatoires. Leur principe est de calculer l'inter-corrélation entre la séquence reçue sur le canal pilote et une séquence testée par la station mobile, puisque le résultat de cette opération sera toujours faible sauf lorsque les séquences sont synchronisées et identiques.

Un premier procédé de synchronisation utilise des filtres adaptés, c'est-à-dire des filtres dont les coefficients sont égaux aux échantillons de la séquence testée. Le résultat de ce filtrage est donc directement la valeur de l'inter-corrélation recherchée. Le débit de sortie de ce filtre étant le même que le débit d'entrée, un pic de corrélation est détecté au moment où la station mobile est synchronisée, de sorte que le temps moyen de synchronisation est relativement court.

Un second procédé utilise des corrélateurs, en appliquant le même principe. Le signal reçu est multiplié par la séquence testée, et une intégration sur plusieurs échantillons permet de détecter, le cas échéant, un pic de corrélation. En l'absence de pic de corrélation, l'opération est réitérée soit avec la même séquence décalée temporellement, soit avec une séquence différente. Le temps moyen de synchronisation est sensiblement plus long qu'avec le premier procédé.

Ces deux procédés présentent l'inconvénient de voir leurs performances nettement dégradées lorsque se produit une déviation en fréquence sur le signal radio reçu. On n'est plus alors en mesure d'associer un pic de corrélation à une réelle synchronisation. La déviation en fréquence peut être due à l'effet Doppler, au fading de Rayleigh, ou aux différences de caractéristiques entre les oscillateurs locaux des stations en communication. Pour traiter le problème, les corrélations doivent être effectuées en faisant une supposition sur la valeur de la déviation en fréquence subie par le signal reçu, et en utilisant une batterie de filtres adaptés dont les fréquences respectives correspondent à différentes valeurs possibles de déviation. Les résultats des différents filtrages sont comparés, et on peut se baser sur le plus fort pic de corrélation pour déterminer quel filtre permet d'obtenir la synchronisation temporelle et fréquentielle recherchée. Une telle solution n'est pas optimale en termes de performance. En outre, elle augmente sensiblement la complexité du récepteur.

Un but de la présente invention est de remédier à ces difficultés, en proposant un procédé de synchronisation temporelle qui soit peu sensible à une éventuelle déviation en fréquence du signal radio.

L'invention propose ainsi un procédé de synchronisation tel qu'énoncé dans la revendication 1.

La robustesse de ce procédé de synchronisation en présence d'une déviation en fréquence peut s'expliquer de la façon suivante. Le signal complexe en bande de base reçu sur le canal pilote est de la forme $r(t) = A(t).e^{2\pi j \Delta ft}c'(t)$, où $c'(t)$ est la séquence de référence reçue avec un décalage temporel, $A(t)$ traduit les perturbations dues au canal de propagation et l'exponentielle traduit une déviation fréquentielle sur le signal. On obtient donc, pour une séquence testée $c(t)$ :

$$E[s(t).s^*(t-\tau)] = E[A(t).c'(t).c(t).e^{2\pi j \Delta ft}.A(t-\tau).c'(t-\tau).c(t-\tau).e^{-2\pi j \Delta f(t-\tau)}]$$

$$= E[A(t).c'(t).c(t).A(t-\tau).c'(t-\tau).c(t-\tau).e^{2\pi j \Delta f\tau}]$$

et

$$E[s(t).s^*(t)] = E[A(t).c'(t).c(t).e^{2\pi j \Delta ft}.A(t).c'(t).c(t).e^{-2\pi j \Delta ft}]$$

$$= E[A(t).c'^2(t).c^2(t).A(t)]$$

$$= E[A(t)^2]$$

Si la séquence testée correspond à la séquence de référence et est synchronisée, alors on a $c(t) = c'(t)$, d'où

$$E[s(t).s^*(t-\tau)] = E[A^2(t)].e^{2\pi j \Delta f\tau} \qquad (1)$$

Sinon, on a :

$$E[s(t).s^*(t-\tau)] = E[A^2(t)].E[c'(t).c(t).c'(t-\tau).c(t-\tau)].e^{2\pi j \Delta f\tau}$$

On constate ainsi que le module de la quantité $E[s(t).s^*(t-\tau)]$, de même que la quantité $E[s(t).s^*(t)]$, sont indépendants de la déviation en fréquence sur le signal radio reçu. Le rapport de ces deux grandeurs est proche de l'unité lorsque la synchronisation est réalisée et sensiblement plus faible dans le cas contraire car les propriétés de corrélation des séquences impliquent alors $E[c'(t).c(t).c'(t-\tau).c(t-\tau)] << 1$ . La comparaison du rapport à un seuil permet de déterminer si la séquence testée est correctement synchronisée, même en présence d'une déviation fréquentielle.

Un autre avantage important du procédé est que, lorsque la synchronisation temporelle est effectuée, il est possible de connaître la valeur de la déviation en fréquence subie par le signal radio à partir de l'argument de la quantité complexe $E[s(t).s^*(t-\tau)]$, et donc a priori de corriger la fréquence de l'oscillateur local pour que le signal soit compréhensible par le récepteur.

Dans un mode de réalisation de l'invention énoncé dans la revendication 4, le calcul des valeurs moyennes porte non pas sur les quantités $s(t)$ définies ci-dessus, mais sur un signal $s'(t)$ obtenu par intégration sur une durée plus courte de cette grandeur $s(t)$. Ce mode de réalisation convient particulièrement lorsqu'on est en présence d'un rapport signal à bruit relativement faible.

D'autres particularités et avantages de l'invention apparaîtront dans la description ci-après d'exemples de réalisation préférés mais non limitatifs. Aux dessins annexés :

- la figure 1 est un schéma synoptique de la partie émission d'une station de base d'un système radiotéléphonique fonctionnant en mode AMRC ;
- la figure 2 est un schéma synoptique de la partie réception d'une station mobile du système ; et
- les figures 3 et 4 représentent schématiquement deux variantes d'un module de synchronisation de la station mobile de la figure 2.

Dans un système de radiotéléphonie cellulaire, des stations de base sont réparties sur le territoire à couvrir.

Dans la zone, ou cellule, couverte par une station de base, plusieurs stations mobiles peuvent communiquer simultanément avec la station de base. Le procédé selon l'invention s'applique aux liaisons descendantes, c'est-à-dire à la transmission des signaux depuis une station de base vers des stations mobiles, pour lesquelles on utilise un accès multiple à répartition par codes (AMRC).

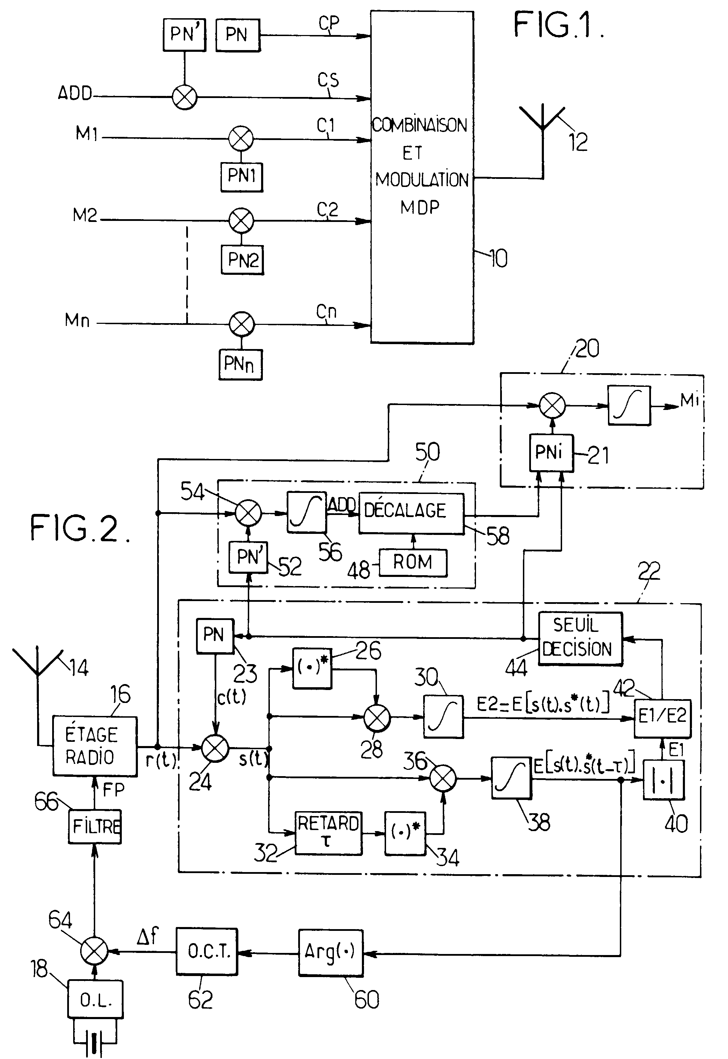

Chaque station de base, telle que celle illustrée à la figure 1, établit des canaux de transmission AMRC C1, C2, ..., Cn définis chacun par une séquence d'étalement respective PN1, PN2, ... PNn. Les séquences d'étalement, qui prennent les valeurs +1 ou -1, sont périodiques, pseudo-aléatoires et pratiquement décorrelées .Elles ont une cadence supérieure à celle des bits d'information à transmettre, par exemple une cadence de 1MHz. Dans l'exemple décrit, les séquences d'étalement sont très longues (périodicité $2^{41}$-1). Elles correspondent toutes à la même séquence de base de périodicité $2^{41}$-1, et sont obtenues en appliquant un décalage temporel à cette séquence de base, ce décalage étant caractéristique de l'utilisateur (station mobile) avec lequel la communication s'effectue sur le canal correspondant. La position instantanée dans la séquence de base est repérée, par une adresse ADD. Sur chaque canal AMRC, les bits d'information à transmettre M1, M2, ..., Mn, qui représentent des signaux vocaux ou de données préalablement codés par des techniques classiques, sont multipliés par la séquence d'étalement produite par un générateur approprié qui peut être constitué classiquement par une cascade de 41 bascules.

La station de base forme en outre un canal pilote CP et un canal de synchronisation CS. Sur le canal pilote CP est émise une séquence de référence PN, sans modulation de bits d'information. La séquence PN, qui prend les valeurs +1 ou -1, est périodique et pseudo-aléatoire. Sa cadence est égale à celle des séquences d'étalement avec lesquelles elle est synchronisée. Le canal de synchronisation CS sert à transmettre l'adresse ADD qui est mise à jour à chaque période de la séquence de référence PN. Les bits de l'adresse ADD sont modulés par une séquence PN' associée à la séquence de référence PN. La séquence PN' a la même cadence et la même périodicité que la séquence PN, et est synchronisée avec celle-ci.

A titre d'exemple, la séquence de référence PN et sa séquence associée PN' sont des séquences de Gold de périodicité 1023 (Voir "Optimum binary sequences for spread spectrum multiplexing", par R. Gold, IEEE Trans. Inform. Theory, IT-13, pages 619-621, octobre 1967). On utilise 512 séquences de Gold de périodicité 1023, formant 256 paires. Une paire de séquences de Gold est attribuée à chaque station de base, une pour la séquence PN et l'autre pour la séquence PN'. Des paires de séquences différentes sont attribuées aux stations de base des cellules voisines pour empêcher les interférences entre stations de base dans les zones frontalières.

Les signaux en bande de base formés dans les canaux de transmission C1, C2, ..., Cn, le canal pilote CP et le canal de synchronisation CS sont combinés puis modulés sur une fréquence porteuse (bloc 10 sur la figure 1). La combinaison consiste en une sommation, éventuellement pondérée, des signaux en bande de base. La fréquence porteuse est par exemple de 2,4 GHz. La modulation peut être une modulation de phase (MDP) à deux états dans le cas où les signaux en bande de base sont réels. Mais, le plus souvent, les signaux en bande de base seront complexes, et on utilisera une modulation de phase à quatre états. Dans ce cas, chacune des séquences pseudo-aléatoires PN1, PN2,..., PNn, PN, PN' comporte deux composantes indépendantes respectivement utilisées sur des voies I et Q du canal correspondant.

Le signal radio obtenu après modulation est émis, via l'antenne 12, à destination des stations mobiles de la cellule.

Au niveau d'une station mobile (figure 2), le signal radio reçu par l'antenne 14 est démodulé en bande de base par l'étage radio 16, au moyen d'une porteuse FP obtenue à partir d'un oscillateur local 18. Le signal numérisé en bande de base r(t) peut alors être traité par des circuits AMRC classiques 20. Comme indiqué symboliquement quement à la figure 2, les circuits 20 effectuent une corrélation entre le signal reçu en bande de base r(t) et la séquence d'étalement PNi attribuée à la station mobile pour extraire, s'il y a lieu, les bits d'information Mi destinés à la station mobile, les autres composantes AMRC du signal r(t) étant éliminées du fait des propriétés d'orthogonalité des séquences d'étalement.

Ce traitement nécessite une synchronisation de la séquence d'étalement PNi vis-à-vis d'au moins un retard de propagation entre la station de base et la station mobile. La recherche de synchronisation est assurée par le module 22 qui teste successivement des séquences de périodicité 1023 jusqu'à en trouver une qui corresponde à la séquence de référence PN de la station de base émettrice, et qui présente avec celle-ci un décalage temporel égal au retard de propagation sur un trajet. Il y a donc a priori 256 x 1023 séquences possibles à tester, correspondant chacune à l'une des 256 séquences de Gold possibles pour la séquence PN, affectée d'un décalage temporel compris entre 0 et 1022 positions.

Pour chaque séquence testée, le module 22 calcule les quantités $E[s(t).s^*(t-\tau)]$ et $E[s(t).s^*(t)]$ dans lesquelles $s(t) = r(t).c(t)$ est le produit, calculé par un multiplieur 24, de la valeur instantanée du signal reçu r(t) et de celle de la séquence testée c(t) fournie par un générateur pseudo-aléatoire 23 ;

$\tau$ est un retard prédéterminé qui est de préférence de l'ordre de l'inverse de la cadence de la séquence de référence PN ; pour une cadence de 1MHz, on pourra choisir $\tau = 1 \mu s$ ;

la notation E[.] représente une valeur moyenne calculée sur un temps d'intégration prédéterminé T qui est de préférence de l'ordre de la période de la séquence de référence PN (1,023 ms).

Le complexe conjugué s*(t) de s(t) est calculé en 26 puis multiplié par s(t) par le multiplieur 28 dont la sortie est adressée à l'intégrateur 30. Parallèlement, le signal s(t) est retardé de $\tau$, en 32, puis le complexe conjugué de s(t-$\tau$) est calculé, en 34, et multiplié par s(t) par le multiplieur 36 dont la sortie est adressée à l'intégrateur 38. A la fin de chaque période d'intégration T, les intégrateurs 30 et 38 délivrent respectivement les quantités E[s(t).s*(t)] et E[s(t).s* (t-$\tau$)].

Le module E1 de la quantité complexe E[s(t).s*(t-$\tau$)] est calculé en 40, puis le rapport E1/E2 = I E[s(t).s*(t-$\tau$)] I / E[s(t).s*(t)] est calculé en 42. Une unité de décision 44 compare ce rapport à un seuil prédéterminé 1/$\lambda$ afin de déterminer si la séquence testée est correcte et synchronisée. Si E1/E2 < 1/$\lambda$, l'unité de décision 44 commande le générateur 23 pour tester une autre séquence, qui sera soit la même séquence de Gold affectée d'un autre décalage, soit une séquence de Gold différente. Si E1/E2 $\geq$ 1/$\lambda$, on considère que la séquence testée correspond à la séquence de référence de la station de base avec un décalage reflétant le retard d'un trajet de propagation entre la station de base et la station mobile. La valeur de ce décalage est transmise au générateur pseudo-aléatoire 21 des circuits de traitement 20, pour que celui-ci affecte ce même décalage à la séquence d'étalement PNi de la station mobile afin de réaliser la synchronisation temporelle sur le trajet de propagation détecté.

On a vu que, dans l'exemple décrit, les séquences d'étalement PN1, PN2, ... PNn des différentes stations mobiles sont obtenues chacune en appliquant à une même séquence de base très longue un décalage caractéristique de la station mobile. A la station mobile, ce décalage caractéristique est stocké dans une mémoire 48 d'un module de récupération d'adresse 50 qui traite le canal de synchronisation CS. Une fois que la séquence de référence PN d'une station de base a été détectée, avec un décalage temporel approprié, on connaît également la séquence de Gold PN' associée à cette séquence de référence. L'unité de décision 44 commande alors le générateur pseudo-aléatoire 52 du module 50 pour qu'il délivre la séquence associée PN' avec le décalage temporel déterminé. Cette séquence associée, qui est ainsi synchronisée, est appliquée au signal r(t) par le multiplieur 54 dont la sortie est adressée à l'entrée d'un intégrateur 56 ayant un temps d'intégration de l'ordre de la durée d'un bit sur le canal de synchronisation CS. La corrélation fournie par l'intégrateur 56 correspond aux bits de l'adresse ADD transmise sur le canal CS. Le décalage stocké dans la mémoire 48 est appliqué, en 58, à l'adresse reçue ADD pour fournir au générateur pseudo-aléatoire 21 des circuits 20 la position qu'il doit adopter dans la longue séquence de base. Cette position est ensuite modifiée pour tenir compte du décalage supplémentaire dû au retard de propagation, fourni par l'unité de décision 44.

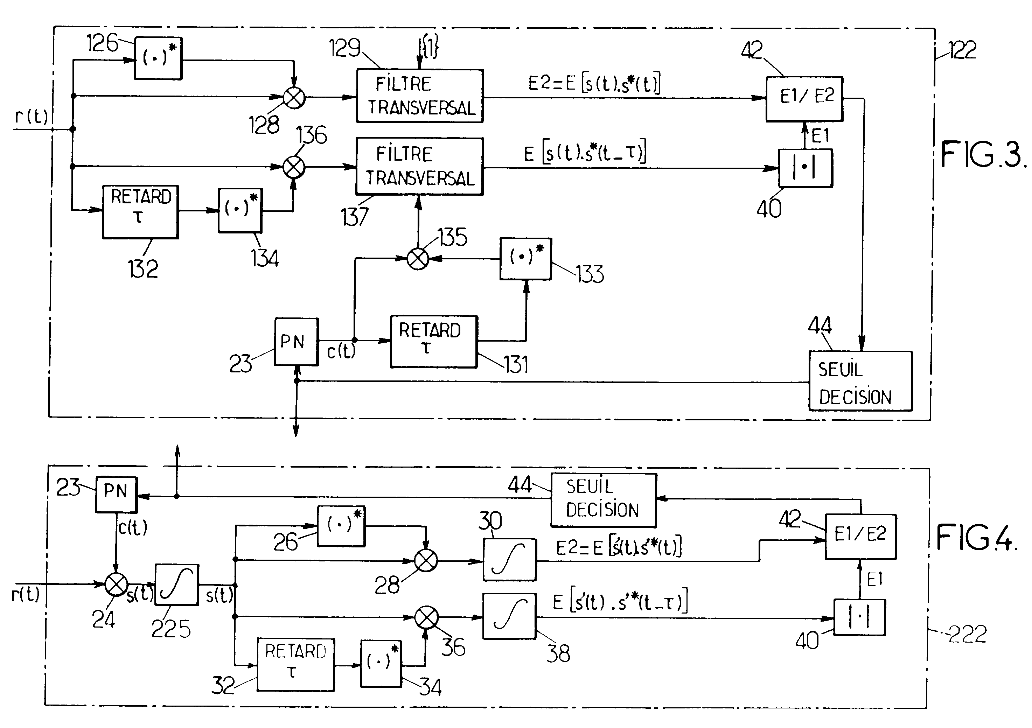

Des circuits autres que celui représenté à la figure 2 sont utilisables pour calculer les quantités E[s(t).s*(t-$\tau$)] et E[s(t).s*(t)]. Par exemple, le module de synchronisation 22 peut être remplacé par le module 122 représenté à la figure 3, dans laquelle des références numériques identiques désignent des éléments semblables à ceux de la figure 2.

Etant donné qu'on a c(t).c*(t) = 1, à une constante de normalisation près, pour toute séquence pseudo-aléatoire testée, les quantités énergétiques E[s(t).s*(t)] et E[r(t).r*(t)] sont identiques. Cette quantité peut être calculée par la branche supérieure du module 122 de la figure 3. Le complexe conjugué r*(t) est obtenu en 126, puis multiplié par r(t) par le multiplieur 128, dont la sortie est adressée à l'entrée d'un filtre transversal 129. Les coefficients du filtre 129 sont égaux à 1 en partie réelle et à 0 en partie imaginaire, de sorte que ce filtre fonctionne en intégrateur pour calculer la valeur moyenne E2. Un multiplieur 136 fournit à l'entrée d'un autre filtre transversal 137 la valeur instantanée de r(t).r*(t-$\tau$) obtenue en multipliant par le signal r(t) le complexe conjugué, calculé en 134, du même signal retardé de $\tau$ en 132. Les coefficients du filtre 137 sont égaux aux valeurs successives des échantillons c(t).c(t-$\tau$). Ils sont fournis par un multiplieur 135 dont une entrée reçoit la valeur instantanée c(t) de la séquence testée produite par le générateur 23, et l'autre entrée reçoit le complexe conjugué de la valeur de la séquence retardée de $\tau$, calculé par les éléments désignés par 131 et 133. On peut vérifier que la sortie du filtre 137 est bien égale à la quantité complexe E[s(t).s*(t-$\tau$)] à calculer. Cette quantité est ensuite traitée et comparée à E2 par des circuits identiques à ceux de la figure 2.

Dans le cas idéal où la station de base n'émettrait que sur le canal pilote CP et où il y aurait un seul trajet de propagation non bruité, le signal reçu r(t) serait de la forme r(t) = A(t).c'(t).$e^{2\pi j\Delta ft}$. On a vu que dans ce cas, la synchronisation se traduit par E1/E2 $\approx$ 1, tandis que l'absence de synchronisation se traduit par E1/E2 << 1. La sélection de la séquence PN peut donc s'effectuer sur la base d'un seuil 1/$\lambda$ compris entre 0 et 1. Pour tenir compte des autres canaux AMRC, des trajets multiples et du bruit, on est amené à choisir un seuil 1/$\lambda$ approprié, étant donné que les plus grandes valeurs du rapport E1/E2 correspondront toujours à la synchronisation sur un trajet de propagation, pourvu que l'atténuation A(t) et la déviation en fréquence $\Delta f$ ne varient pas trop sensiblement à l'échelle du temps de calcul des valeurs moyennes. Dans la pratique, la valeur de $\lambda$ pourra être déterminée expérimentalement ou par simulation. Dans l'exemple décrit, des résultats de simulation satisfaisants ont été obtenus avec $\lambda$ = 10 et $\lambda$ = 15. Pour réduire la perturbation par les autres canaux AMRC, on peut encore, au niveau de la station de base, effectuer la combinaison des canaux en affectant une pondération supérieure au canal pilote CP.

La durée de synchronisation est au maximum de 256.1023 = 261888 fois la durée du test d'une séquence. Si le temps d'intégration pour le calcul des valeurs moyennes est de l'ordre de la période de la séquence PN, cela peut conduire à des durées de synchronisation longues, à moins que la station mobile connaisse a priori la cellule où elle se trouve. La durée de synchronisation peut être réduite en stockant des portions de signal r(t) dans un registre tampon et en effectuant sur ces portions des calculs parallèles de rapports E1/E2, pour pouvoir tester les séquences plus rapidement.

Pour réduire la durée de synchronisation, on peut également utiliser pour les intégrateurs 30, 38 un temps d'intégration inférieur à la période de la séquence de référence PN, par exemple de l'ordre de quelques dizaines de fois la durée d'un échantillon de la séquence. Ceci permet de sélectionner des séquences, qui sont ensuite soumises à une vérification de synchronisation dans laquelle les mêmes calculs et les mêmes comparaisons sont effectués, mais en utilisant dans les intégrateurs 30, 38 un temps d'intégration T plus long, de l'ordre de la période de la séquence. La séquence testée n'est finalement retenue que si la vérification est positive.

Pour l'optimisation de la durée moyenne de synchronisation, on pourra se référer à l'article "Acquisition time performance of PN Spread-Spectrum systems", par J.K. Holmes, IEEE Trans.on Comm., Vol. com-25, N° 8, août 1977, pages 778-783.

Pour optimiser les performances du procédé en présence d'un faible rapport signal à bruit, on peut effectuer le calcul des valeurs moyennes non pas sur la base des signaux s(t), mais sur la base de signaux s'(t) obtenus par une première intégration de s(t). On utilise alors un module de synchronisation 222 tel que celui de la figure 4. Ce module de synchronisation est identique à celui de la figure 2, sauf en ce qu'un intégrateur 225, ayant un temps d'intégration $T_1$ petit devant la période de la séquence de référence, est placé en sortie du multiplieur 24 fournissant s(t). Cet intégrateur permet de diminuer la puissance du bruit ajouté au signal, pour que ce bruit interfère moins lors des opérations suivantes. Une telle solution ne peut être adoptée que si la première intégration est faisable : si une déviation en fréquence excessive fait tourner la phase du signal reçu de telle manière que les résultats de l'intégration soient sans signification, l'opération est inutile. La limite imposée sur ce temps d'intégration $T_1$ est que si $T_1 = N.T_0$ ($T_0$ est la durée d'un échantillon du signal s(t)), on doit avoir : $2\pi\Delta f.N.T_0 < \pi$, donc $N < 1/(2.\Delta f.T_0)$. Les différents temps d'intégration sont tels que le temps d'intégration total soit de l'ordre de la période de la séquence de référence PN.

Le procédé selon l'invention permet d'effectuer l'identification d'une station de base par la détection de sa séquence de référence, la synchronisation temporelle avec cette station de base par la détermination d'un retard de propagation, et également une correction fréquentielle pour tenir compte d'une éventuelle déviation en fréquence.

En effet, d'après la relation (1), on constate que l'argument de la quantité complexe E[s(t).s*(t-τ)], calculée en testant les séquences, est proportionnel à la déviation en fréquence Δf. L'argument de E[s(t).s*(t-τ)] est extrait (bloc 60 sur la figure 2) pour commander un oscillateur commandé en tension 62. La sortie de l'oscillateur 62 est à la fréquence Δf, et est fournie à l'entrée d'un mélangeur 64, dont l'autre entrée reçoit la porteuse délivrée par l'oscillateur local 18. La fréquence porteuse est ainsi corrigée, après filtrage 66, de façon proportionnelle à l'argument de E[s(t).s*(t-τ)] pour compenser la déviation en fréquence.

Mais il n'est pas nécessaire d'attendre que la compensation de cette déviation soit accomplie pour procéder à la recherche de synchronisation, parce que le test de synchronisation porte sur le module E1 de E[s(t).s*(t-τ)], qui n'est pas influencé par la déviation en fréquence Δf.

Comme l'argument $2\pi.\Delta f.\tau$ de la quantité E[s(t).s*(t-τ)] est petit, le calcul de cet argument par le bloc 60 peut se ramener simplement à :

$$2\pi.\Delta f.\tau \approx \sin(2\pi.\Delta f.\tau) = \mathrm{Im}\left\{E[s(t).s^*(t-\tau)]\right\}/E1,$$

$$\mathrm{Im}\left\{ . \right\}$$

désignant la partie imaginaire.

**Revendications**

1. Procédé de synchronisation pour des communications radiotéléphoniques à accès multiple à répartition par codes (AMRC), communications dans lesquelles une station de base établit, outre des canaux de transmission AMRC (C1, C2, ...Cn) définis chacun par une séquence d'étalement respective (PN1, PN2, ..., PNn) modulant des bits d'information à transmettre (M1 , M2, ...,Mn), un canal pilote (CP) sur lequel est émise une séquence périodique pseudo-aléatoire de référence (PN) synchronisée avec les séquences d'étalement et ayant une cadence supérieure à celle des bits à transmettre, les signaux en bande de base transmis sur lesdits canaux étant combinés puis modulés sur une fréquence porteuse pour former le signal radio émis par la station de base à destination de stations mobiles,

le procédé de synchronisation consistant à sélectionner, au niveau d'une station mobile, au moins une séquence périodique pseudo-aléatoire qui corresponde et soit synchronisée avec la séquence de référence (PN) émise sur le canal pilote (CP) d'une station de base et reçue par la station mobile suivant un trajet de propagation, et étant caractérisé en ce que, à la station mobile, on teste différentes séquences possibles en calculant les quantités E $[s(t).s^*(t-\tau)]$ et $E[s(t).s^*(t)]$, où $E[.]$ désigne la valeur moyenne calculée sur un temps d'intégration prédéterminé (T), $\tau$ désigne un retard prédéterminé, et $s(t) = r(t).c(t)$ désigne le produit du signal reçu en bande de base $(r(t))$ par la valeur $(c(t))$ de la séquence testée, et en calculant le rapport $|E[s(t).s^*(t-\tau)]| / E[s(t).s^*(t)]$, et en ce qu'on sélectionne la séquence testée si ledit rapport dépasse un seuil prédéterminé.

2. Procédé selon la revendication 1, caractérisé en ce que ledit temps d'intégration prédéterminé (T) est de l'ordre de la période de la séquence de référence.

3. Procédé selon la revendication 1, caractérisé en ce que ledit temps d'intégration prédéterminé est inférieur à la période de la séquence de référence, et en ce qu'après avoir sélectionné une séquence testée, on procède à une vérification de synchronisation en effectuant des calculs et des comparaisons identiques sauf en ce qu'on utilise un temps d'intégration supérieur, de l'ordre de la période de la séquence de référence.

4. Procédé de synchronisation pour des communications radiotéléphoniques à accès multiple à répartition par codes (AMRC), communications dans lesquelles une station de base établit, outre des canaux de transmission AMRC (C1, C2, ..., Cn) définis chacun par une séquence d'étalement respective (PN1, PN2, . . ., PNn) modulant des bits d'information à transmettre (M1, M2, ...,Mn), un canal pilote (CP) sur lequel est émise une séquence périodique pseudo-aléatoire de référence (PN) synchronisée avec les séquences d'étalement et ayant une cadence supérieure à celle des bits à transmettre, les signaux en bande de base transmis sur lesdits canaux étant combinés puis modulés sur une fréquence porteuse pour former le signal radio émis par la station de base à destination de stations mobiles,

le procédé de synchronisation consistant à sélectionner, au niveau d'une station mobile, au moins une séquence périodique pseudo-aléatoire qui corresponde et soit synchronisée avec la séquence de référence émise sur le canal pilote (CP) d'une station de base et reçue par la station mobile suivant un trajet de propagation, et étant caractérisé en ce que, à la station mobile, on teste différentes séquences possibles en calculant les quantités E $[s'(t).s'^*(t-\tau)]$ et $E[s'(t).s'^*(t)]$ , où $E[.]$ désigne la valeur moyenne calculée sur un premier temps d'intégration prédéterminé, $\tau$ désigne un retard prédéterminé, et $s'(t)$ désigne un signal obtenu par intégration sur un second temps, plus court que le premier temps d'intégration et que la période de la séquence de référence (PN), du produit $(s(t))$ du signal reçu en bande de base $(r(t))$ par la valeur $(c(t))$ de la séquence testée, et en calculant le rapport $|E[s'(t).s'^*(t-\tau)]| / E[s'(t).s'^*(t)]$, et en ce qu'on sélectionne la séquence testée si ledit rapport dépasse un seuil prédéterminé.

5. Procédé selon la revendication 4, caractérisé en ce que le temps d'intégration total est de l'ordre de la période de la séquence de référence.

6. Procédé selon l'une quelconque des revendications 1 à 5, caractérisé en ce que ledit retard prédéterminé $(\tau)$ est de l'ordre de l'inverse de la cadence de la séquence de référence.

7. Procédé selon l'une quelconque des revendications 1 à 6, caractérisé en ce qu'on modifie la fréquence porteuse (FP) utilisée pour obtenir le signal en bande de base $(r(t))$ par démodulation du signal radio reçu par la station mobile, en appliquant à cette fréquence porteuse une correction proportionnelle à l'argument de la quantité complexe $E[s(t).s^*(t-\tau)]$ calculée en testant les séquences.

**Patentansprüche**

1. Synchronisationsverfahren für Funktelefonkommunikationen mit Codemultiplex-Vielfachzugriff (CDMA), bei denen eine Basisstation zusätzlich zu den CDMA-Übertragungskanälen (C1, C2, ...Cn), die jeweils durch eine Spreizsequenz (PN1, PN2, ..., PNn) definiert sind, die zu übertragende Datenbits (M1, M2, ..., Mn) moduliert, einen Steuerkanal (CP) erstellt, auf dem eine pseudozufällige periodische Bezugssequenz (PN) ausgesendet wird, welche mit den Spreizsequenzen synchronisiert ist und einen Takt aufweist, der höher als derjenige der zu übertragenden Bits ist, wobei die auf diesen Kanälen übertragenen Grundbandsignale kombiniert und dann auf eine Trägerfrequenz aufmoduliert werden, um das von der Basisstation im Hinblick auf die mobilen Stationen auszusendende Funksignal zu bilden,

wobei das Synchronisationsverfahren darin besteht, daß an einer mobilen Station mindestens eine pseudozufällige periodische Sequenz ausgewählt wird, welche der auf dem Steuerkanal (CP) einer Basisstation ausgesendeten und von der mobilen Station entlang eines Ausbreitungspfades empfangenen Bezugssequenz (PN) entspricht und gegebenenfalls damit synchronisiert ist, und dadurch gekennzeichnet ist, daß an der mobilen Station verschiedene mögliche Sequenzen getestet werden, indem die Größen $E[s(t) \cdot s^*(t-\tau)]$ und $E[s(t) \cdot s^*(t)]$ berechnet werden, wobei $E[\cdot]$ den auf eine vorgegebene Integrationszeit (T) berechneten Mittelwert bezeichnet, $\tau$ eine vorgegebene Verzögerung bezeichnet, und $s(t) = r(t) \cdot c(t)$ das Produkt aus dem auf dem Grundband empfangenen Signal ($r(t)$) und dem Wert ($c(t)$) der getesteten Sequenz bezeichnet, und das Verhältnis $|E[s(t) \cdot s^*(t-\tau)]|/ E[s(t) \cdot s^*(t)]$ berechnet wird, sowie dadurch, daß die getestete Sequenz ausgewählt wird, falls das Verhältnis einen vorgegebenen Schwellenwert übersteigt.

2. Verfahren nach Anspruch 1, dadurch gekennzeichnet, daß die vorgegebene Integrationszeit (T) von der Größenordnung der Periode der Bezugssequenz ist.

3. Verfahren nach Anspruch 1, dadurch gekennzeichnet, daß die vorgegebene Integrationszeit geringer als die Periode der Bezugssequenz ist, sowie dadurch, daß nach dem Auswählen einer getesteten Sequenz eine Synchronisationsüberprüfung mittels der Durchführung von identischen Berechnungen und Vergleichen vorgenommen wird, mit der Ausnahme, daß eine größere Integrationszeit von der Größenordnung der Periode der Bezugssequenz angewendet wird.

4. Synchronisationsverfahren für Funktelefonkommunikationen mit Codemultiplex-Vielfachzugriff (CDMA), bei denen eine Basisstation zusätzlich zu den CDMA-Übertragungskanälen (C1, C2, ...Cn), die jeweils durch eine Spreizsequenz (PN1, PN2, ... PNn) definiert sind, die zu übertragende Datenbits (M1, M2, ..., Mn) moduliert, einen Steuerkanal (CP) erstellt, auf dem eine pseudozufällige periodische Bezugssequenz (PN) ausgesendet wird, welche mit den Spreizsequenzen synchronisiert ist und einen Takt aufweist, der höher als derjenige der zu übertragenden Bits ist, wobei die auf diesen Kanälen übertragenen Grundbandsignale kombiniert und dann auf eine Trägerfrequenz aufmoduliert werden, um das von der Basisstation im Hinblick auf die mobilen Stationen auszusendende Funksignal zu bilden,

wobei das Synchronisationsverfahren darin besteht, daß an einer mobilen Station mindestens eine pseudozufällige periodische Sequenz ausgewählt wird, welche der auf dem Steuerkanal (CP) einer Basisstation ausgesendeten und von der mobilen Station entlang eines Ausbreitungspfades empfangenen Bezugssequenz entspricht und gegebenenfalls damit synchronisiert ist, und dadurch gekennzeichnet ist, daß an der mobilen Station verschiedene mögliche Sequenzen getestet werden, indem die Größen $E[s'(t) \cdot s'^*(t-\tau)]$ und $E[s'(t) \cdot s'^*(t)]$ berechnet werden, wobei $E[\cdot]$ den auf eine vorgegebene erste Integrationszeit berechneten Mittelwert bezeichnet, $\tau$ eine vorgegebene Verzögerung bezeichnet, und $s'(t)$ ein Signal bezeichnet, welches durch Integration des Produktes ($s(t)$) aus dem auf dem Grundband ($r(t)$) empfangenen Signal und dem Wert ($c(t)$) der getesteten Sequenz auf eine zweite Zeit erhalten wird, die kürzer als die erste Integrationszeit und als die Periode der Bezugssequenz (PN) ist, und das Verhältnis $|E[s'(t) \cdot s'^*(t-\tau)]| / E[s'(t) \cdot s'^*(t)]$ berechnet wird, sowie dadurch, daß die getestete Sequenz ausgewählt wird, falls das Verhältnis einen vorgegebenen Schwellenwert übersteigt.

5. Verfahren nach Anspruch 4, dadurch gekennzeichnet, daß die Gesamtintegrationszeit in der Größenordnung der Periode der Bezugssequenz ist.

6. Verfahren nach einem der Ansprüche 1 bis 5, dadurch gekennzeichnet, daß die vorgegebene Verzögerung ($\tau$) in der Größenordnung des Kehrwertes des Taktes der Bezugssequenz ist.

7. Verfahren nach einem der Ansprüche 1 bis 6, dadurch gekennzeichnet, daß die verwendete Trägerfrequenz (FP) zum Erhalten des Grundbandsignals ($r(t)$) durch Demodulation des von der mobilen Station empfangenen Funksignals modifiziert wird, indem auf diese Trägerfrequenz eine proportionale Korrektur mit dem Argument der beim Testen der Sequenzen berechneten komplexen Größe $E[s(t) \cdot s^*(t-\tau)]$ angewendet wird.

## Claims

1. A method of synchronization, for code division multiple access (CDMA) radiotelephone communications in which a base station establishes a pilot channel (CP) in addition to a plurality of CDMA transmission channels (C1, C2, .... Cn) each defined by a respective spreading sequence (PN1, PN2,..., PNn) modulating data bits to be transmitted (M1, M2,..., Mn), a periodic pseudorandom reference sequence (PN) synchronized with the spreading sequences and having a chip rate greater than the bit rate of the data bits to be transmitted being transmitted over the pilot channel (CP), the base band signals transmitted over said channels being combined and then modulated on a carrier frequency to form a radio signal transmitted by the base station to mobile stations, the synchronization method consisting in selecting, at a mobile station, at least one periodic pseudorandom sequence which corresponds to and is synchronized with the reference sequence (PN) transmitted over the pilot channel (CP) of a base station and received by the mobile station over a propagation path, and being characterized in that, at the mobile station, various possible sequences are tested by calculating the quantities $E[s(t).s^*(t-\tau)]$ and $E[s(t).s^*(t)]$, in which $E[.]$ designates the mean value calculated over a predetermined integration time (T), $\tau$ designates a predetermined delay, and $s(t) = r(t).c(t)$ designates the product of the received base band signal ($r(t)$) by the value ($c(t)$) of the sequence under test, and by calculating the ratio $|E[s(t).s^*(t-\tau)]| / E[s(t).s^*(t)]$, and in that the sequence under test is selected if said ratio exceeds a predetermined threshold.

2. A method according to claim 1, characterized in that said predetermined integration time (T) is of the same order as the period of the reference sequence.

3. A method according to claim 1, characterized in that said predetermined integration time is less than the period of the reference sequence, and in that after a sequence under test has been selected, synchronization is verified by performing calculations and comparisons that are identical except in that a longer integration time is used, of the same order as the period of the reference sequence.

4. A method of synchronization, for code division multiple access (CDMA) radiotelephone communications in which a base station establishes a pilot channel (CP) in addition to a plurality of CDMA transmission channels (C1, C2, .... Cn) each defined by a respective spreading sequence (PN1, PN2,..., PNn) modulating data bits to be transmitted (M1, M2,..., Mn), a periodic pseudorandom reference sequence (PN) synchronized with the spreading sequences and having a chip rate greater than the bit rate of the data bits to be transmitted being transmitted over the pilot channel (CP), the base band signals transmitted over said channels being combined and then modulated on a carrier frequency to form a radio signal transmitted by the base station to mobile stations, the synchronization method consisting in selecting, at a mobile station, at least one periodic pseudorandom sequence which corresponds to and is synchronized with the reference sequence (PN) transmitted over the pilot channel (CP) of a base station and received by the mobile station over a propagation path, and being characterized in that, at the mobile station, various possible sequences are tested by calculating the quantities $E[s'(t).s'^*(t-\tau)]$ and $E[s'(t).s'^*(t)]$, in which $E[.]$ designates the mean value calculated over a first predetermined integration time (T), $\tau$ designates a predetermined delay, and $s'(t) = r(t).c(t)$ designates a signal obtained by integrating, over a second integration time, shorter than the first integration time and than the period of the refenrece sequence (PN), the product of the received base band signal by the value ($c(t)$) of the sequence under test, and by calculating the ratio $|E[s'(t).s'^*(t-\tau)]| / E[s'(t).s'^*(t)]$, and in that the sequence under test is selected if said ratio exceeds a predetermined threshold.

5. A method according to claim 4, characterized in that said total integration time is of the same order as the period of the reference sequence.

6. A method according to any one of claims 1 to 5, characterized in that said predetermined delay ($\tau$) is of the same order as the inverse of the chip rate of the reference sequence.

7. A method according to any one of claims 1 to 6, characterized in that the carrier frequency (FP), used for obtaining the base band signal ($r(t)$) by demodulating the radio signal received by the mobile station, is modified by applying a correction thereto, which correction is proportional to the argument of the complex quantity $E[s(t).s^*(t-\tau)]$ calculated while testing the sequences.

**EP 0 630 120 B1**

FIG.1.

FIG.2.

FIG.3.

FIG.4.

EP 0 630 120 B1